# EUROPÄISCHE PATENTANMELDUNG

(11) **EP 4 427 565 A1**
(43) Veröffentlichungstag der Anmeldung: **11.09.2024**
(21) Anmeldenummer: 24401008.8
(22) Anmeldetag: 28.02.2024
(51) Int. Cl.: A01C 7/18, A01C 7/04, A01C 7/12

(54) **DOSIEREINRICHTUNG ZUM DOSIEREN VON AUSBRINGMATERIAL UND VERFAHREN ZUM EINSTELLEN EINER DOSIEREINRICHTUNG**

(30) Priorität: 07.03.2023 DE 102023105598
(71) Anmelder: Amazonen-Werke H. Dreyer SE & Co. KG, 49205 Hasbergen (DE)
(72) Erfinder: Hilbert, Florenz, 49205 Hasbergen (DE)

(57) **Zusammenfassung**

Die Erfindung betrifft eine Dosiereinrichtung (10) zum Dosieren von Ausbringmaterial für eine dosierte Ablage von Ausbringmaterial auf eine landwirtschaftliche Nutzfläche durch eine landwirtschaftliche Ausbringmaschine, mit einem Rotorgehäuse (12), einem in dem Rotorgehäuse (12) angeordneten Dosierrotor (14), welcher dazu eingerichtet ist, zum Dosieren des Ausbringmaterials eine Rotationsbewegung auszuführen, und einem Einstellmechanismus (26), mittels welchem die Axialposition des Dosierrotors (14) in dem Rotorgehäuse (12) einstellbar ist.

## Beschreibung

Die Erfindung betrifft eine Dosiereinrichtung zum Dosieren von Ausbringmaterial nach dem Oberbegriff des Patentanspruchs 1 und ein Verfahren zum Einstellen einer Dosiereinrichtung einer landwirtschaftlichen Ausbringmaschine nach dem Oberbegriff des Patentanspruchs 13.

Gattungsgemäße Dosiereinrichtungen weisen üblicherweise ein Rotorgehäuse auf, in welchem ein Dosierrotor angeordnet ist, wobei der Dosierrotor zum Dosieren des Ausbringmaterials eine Rotationsbewegung ausführt. Aufgrund von Fertigungstoleranzen, Alterungserscheinungen, Verschleiß und/oder Beschädigungen kann es zu einem seitlichen Schleifen des Dosierrotors an einer Innenwandung des Rotorgehäuses kommen. Zum Aufheben des Schleifkontakts ist das Einstellen der Axialposition des Dosierrotors erforderlich.

Bei den aus der Praxis bekannten Einstellmechaniken zur Einstellung der Axialposition des Dosierrotors ist es bisher erforderlich, dass ein Einstellglied relativ zur Antriebswelle des Dosierrotors verdreht werden muss, um die Axialposition des Dosierrotors in dem Rotorgehäuse einzustellen. Das Einstellen der Axialposition des Dosierrotors mit derartigen Einstellmechaniken ist vergleichsweise komplex und aufwändig. Die Einstellung der Axialposition des Dosierrotors ist häufig für den Maschinenbediener nicht ohne Weiteres möglich, sodass ein Schleifkontakt häufig nur im Rahmen von Wartungsarbeiten durch Fachpersonal durchgeführt wird.

Die der Erfindung zugrunde liegende Aufgabe besteht also darin, die Einstellung der Axialposition eines Dosierrotors innerhalb eines Rotorgehäuses zu vereinfachen.

Die Aufgabe wird gelöst durch eine Dosiereinrichtung der eingangs genannten Art, wobei der Einstellmechanismus der erfindungsgemäßen Dosiereinrichtung eine in Bezug auf eine Antriebswelle für den Dosierrotor verdrehgesicherte und in Axialrichtung bewegbare Positionierhülse aufweist, über welche der Dosierrotor in Axialrichtung verschiebbar ist.

Durch den Einstellmechanismus können Fertigungstoleranzen ausgeglichen werden, sodass beispielsweise seitliches Schleifen des Dosierrotors an der Innenwandung des Rotorgehäuses vermieden werden kann. Auch ein verschleißbedingter oder beschädigungsbedingter seitlicher Schleifkontakt kann mittels des Einstellmechanismus aufwandsarm aufgelöst werden. Die Dosiereinrichtung kann eine Rotorarretierung aufweisen, mittels welcher der Dosierrotor beim Einstellen der Axialposition des Dosierrotors arretierbar ist. Über die Verdrehsicherung der Positionierhülse wirkt die Rotorarretierung auch auf die Positionierhülse. Die Rotorarretierung verhindert eine Drehbewegung des Dosierrotors und der Positionierhülse beim Einstellen der Axialposition des Dosierrotors.

Unter dem Begriff "Dosieren" ist bevorzugt ein Portionieren des Ausbringmaterials innerhalb der Dosiereinrichtung zu verstehen, bei dem Materialportionen des Ausbringmaterials zur diskontinuierlichen Abgabe des Ausbringmaterials erzeugt werden. Zum Portionieren des Ausbringmaterials ist der Rotor vorzugsweise nach Art wenigstens eines Portionierflügels bzw. Portionierpaddels ausgebildet. Alternativ oder zusätzlich kann unter dem Begriff "Dosieren" auch ein Vereinzeln von, insbesondere in der Dosiereinrichtung, vorgehaltenem Ausbringmaterial verstanden werden, anhand dem einzelne Körner des Ausbringmaterials in definierten Abständen zueinander und/oder in kontinuierlicher Weise auf der Nutzfläche abgelegt werden. Zum Vereinzeln des Ausbringmaterials ist der Rotor vorzugsweise nach Art einer Vereinzelungsscheibe ausgebildet, welche eine Vielzahl von Kornaufnahmeausnehmungen zum Mitnehmen von Körnen aufweist. Ferner kann unter dem Begriff "Dosieren" alternativ oder zusätzlich auch ein Dosieren des Ausbringmaterials anhand wenigstens eines aus dem Stand der Technik, insbesondere an pneumatischen Sämaschinen, bekannten Zellenrads oder dergleichen verstanden werden.

In einer bevorzugten Ausführungsform der erfindungsgemäßen Dosiereinrichtung weist der Einstellmechanismus ein, insbesondere durch eine Drehbewegung, in Axialrichtung bewegbares Einstellglied auf, über welches die Positionierhülse in Axialrichtung verschiebbar ist. Das Einstellglied kann in ein Gewinde an der Antriebswelle für den Dosierrotor eingreifen. Das Einstellglied kann als Einstellschraube ausgebildet sein, wobei die Positionierhülse durch Hineindrehen und Herausdrehen der Einstellschraube in Axialrichtung verschiebbar ist. Die Einstellschraube kann in ein Gewinde in der Antriebswelle für den Dosierrotor, insbesondere in ein Innengewinde einer Ausnehmung in der Antriebswelle für den Dosierrotor, eingreifen. Die Einstellschraube kann eine Senkschraube sein, welche zum axialen Verschieben der Positionierhülse und des Dosierrotors linksbeziehungsweise rechtsherum verdrehbar ist. Das Einstellglied kann alternativ als Einstellmutter ausgebildet sein, wobei die Positionierhülse durch Hineindrehen und Herausdrehen der Einstellmutter in Axialrichtung verschiebbar ist. Die Einstellmutter kann in diesem Fall beispielsweise in ein Außengewinde an der Antriebswelle für den Dosierrotor eingreifen.

In einer anderen bevorzugten Ausführungsform der erfindungsgemäßen Dosiereinrichtung weist das Einstellglied eine stirnseitige Werkzeugaufnahme auf, über welche mittels eines Einstellwerkzeugs eine Drehbewegung in das Einstellglied einbringbar ist. Das Einstellglied ist vorzugsweise ohne Demontage des Dosierrotors von außen zugänglich. Die stirnseitige Werkzeugaufnahme des Einstellglieds ist auch bei montiertem Dosierrotor noch zugänglich. Die stirnseitige Werkzeugaufnahme kann beispielsweise durch einen Innensechskant, einen Schlitz oder einen Kreuzschlitz gebildet werden. Alternativ kann das Einstellglied über das Einstellwerkzeug auch arretiert werden, sodass das Einstellen des Axialspiels über ein Einbringen einer Rotationsbewegung in den Dosierrotor erfolgt.

In einer anderen bevorzugten Ausführungsform der erfindungsgemäßen Dosiereinrichtung ist das Einstellglied in der Positionierhülse angeordnet. Die Positionierhülse weist vorzugsweise eine Hülsenausnehmung auf, wobei eine Hülsenwandung um die Hülsenausnehmung umläuft. Das Einstellglied ist vorzugsweise in der Hülsenausnehmung angeordnet, wobei die Hülsenwandung um das Einstellglied umlaufen kann.

In einer anderen bevorzugten Ausführungsform der erfindungsgemäßen Dosiereinrichtung ist das Einstellglied mittels eines Sicherungselements axial in der Positionierhülse gesichert, wobei das Sicherungselement vorzugsweise dazu eingerichtet ist, eine nach außen gerichtete Axialbewegung des Einstellglieds auf die Positionierhülse zu übertragen. Das Sicherungselement kann beispielsweise ein Sicherungsring sein. Der Sicherungsring kann in eine Ringnut in der Positionierhülse eingesetzt sein.

Die erfindungsgemäße Dosiereinrichtung wird ferner dadurch vorteilhaft weitergebildet, dass das Einstellglied und die Positionierhülse über einen Axialanschlag zusammenwirken, welcher vorzugsweise dazu eingerichtet ist, eine nach innen gerichtete Axialbewegung des Einstellglieds auf die Positionierhülse zu übertragen. Das Einstellglied kann eine Kontaktfläche aufweisen, welche mit dem Sicherungselement in Kontakt steht. Das Einstellglied kann eine weitere Kontaktfläche aufweisen, welche mit einem Zwischenglied, beispielsweise einem Deformationskörper, in Kontakt steht.

In einer anderen bevorzugten Ausführungsform der erfindungsgemäßen Dosiereinrichtung ist zwischen der Positionierhülse und dem Einstellglied ein elastisch verformbarer Deformationskörper angeordnet, welcher dazu eingerichtet ist, in einem verformten Zustand durch Verspannen von Positionierhülse und Einstellglied eine unbeabsichtigte Relativbewegung von Positionierhülse und Einstellglied zu verhindern oder zumindest zu hemmen. Der Deformationskörper kann umlaufend sein. Der Deformationskörper kann ein Dichtungskörper sein. Der Dichtungskörper kann ein Dichtring, insbesondere ein O-Ring, sein. Der als Dichtungskörper ausgebildete Deformationskörper dichtet den Einstellmechanismus nach außen hin gegen Schmutz ab und sorgt dafür, dass die Positionierhülse dauerhaft auf der Antriebswelle für den Dosierrotor gleiten kann. Der als Dichtungskörper ausgebildete Deformationskörper verhindert das Eindringen von Schmutzpartikeln in den Kontaktbereich zwischen Antriebswelle und Positionierhülse. Der Deformationskörper verhindert ferner ein selbstständiges Verstellen des Einstellmechanismus. Bei der Montage der Dosiereinrichtung wird das Einstellglied vorzugsweise so weit eingeschraubt, dass der Deformationskörper sich nicht weiter oder kaum noch weiter zusammendrücken lässt. In diesem Zustand kann beispielsweise eine durch einen Versatz in der Hülsenausnehmung gebildete innenliegende, insbesondere ringförmige, Kontaktfläche der Positionierhülse das stirnseitige Ende der Antriebswelle berühren. Anschließend wird eine Passscheibe auf den Kopf des Einstellglieds gelegt und das Sicherungselement eingesetzt. Hierbei sollte nur ein schmaler Spalt zwischen der Passscheibe und dem Sicherungselement vorhanden sein. Nun wird das Einstellglied wieder leicht gelöst, sodass der Deformationskörper aber trotzdem noch vorgespannt ist. Hierdurch wird sichergestellt, dass sich das Einstellglied nicht von allein relativ zur Positionierhülse verdreht und somit die eingestellte Position beibehalten wird.

Die erfindungsgemäße Dosiereinrichtung wird ferner dadurch vorteilhaft weitergebildet, dass die Positionierhülse formschlüssig, insbesondere mittels einer Passfeder, an der Antriebswelle für den Dosierrotor verdrehgesichert ist. Die Antriebswelle weist vorzugsweise eine Nut auf, in welche die Passfeder eingesetzt ist. Ferner weist die Positionierhülse vorzugsweise eine Nut auf, in welche die Passfeder eingesetzt ist. Alternativ ist die Positionierhülse über eine Querbohrung mit Spannstift in Kombination mit einer gefrästen Nut an der Antriebswelle verdrehgesichert.

In einer anderen bevorzugten Ausführungsform weist die Dosiereinrichtung einen Antrieb auf, welcher in einem Antriebsgehäuse angeordnet und dazu eingerichtet ist, die Antriebswelle rotatorisch anzutreiben, wobei zwischen dem Antriebsgehäuse und der Positionierhülse ein Wellendichtring angeordnet ist. Der Antrieb beziehungsweise die Antriebswelle sowie der Innenbereich der Positionierhülse werden durch den Wellendichtring und den als Dichtkörper ausgebildeten Deformationskörper abgedichtet, sodass sich eine Einhausung der sich in der Positionierhülse befindlichen Teile ergibt. Ferner kommt es zur Einhausung der Antriebswelle. Die Antriebswelle ist im Schmutzbereich komplett geschützt und muss nicht korrosionsbeständig ausgeführt werden. Der Deformationskörper darf jedoch nicht so weich sein, dass sich dieser trotz Vorspannung leicht eindrücken lässt, weil der Dosierrotor sonst bei Krafteinwirkung minimal vom Antrieb wegbewegt werden könnte.

In einer anderen bevorzugten Ausführungsform der erfindungsgemäßen Dosiereinrichtung ist der Dosierrotor als Portionierrotor zum Erzeugen von Materialportionen oder als Vereinzelungsrotor zum Vereinzeln von Materialkörnern ausgebildet. Der Portionierrotor kann einen oder mehrere Portionierflügel umfassen. Der Vereinzelungsrotor kann eine, insbesondere Kornaufnahmeausnehmungen aufweisende, Vereinzelungsscheibe oder eine Vereinzelungstrommel umfassen. Bei einer Vereinzelung wird das Gehäuse mit Überdruck oder mit Unterdruck beaufschlagt, damit die Materialkörner an der Vereinzelungsscheibe oder der Vereinzelungstrommel anhaften. Der als Dichtungskörper ausgebildete Deformationskörper, welcher beispielsweise ein O-Ring sein kann, verhindert in diesem Fall, dass Luft aus dem Rotorgehäuse in das Antriebsgehäuse oder von dem Antriebsgehäuse in das Rotorgehäuse strömt. Der Wellendichtring auf der Positionierhülse ist in diesem Fall ebenfalls zur pneumatischen Abdichtung erforderlich.

In einer anderen besonders bevorzugten Ausführungsform der erfindungsgemäßen Dosiereinrichtung ist der Deformationskörper als Dichtungskörper ausgebildet, welcher dazu eingerichtet ist, den Einstellmechanismus zumindest teilweise abzudichten. Der Deformationskörper dichtet den Einstellmechanismus dabei vorzugsweise zumindest einseitig und/oder zum Inneren hin ab. Der als Dichtungskörper ausgebildete Deformationskörper und der Wellendichtring sind besonders bevorzugt derart innerhalb der Dosiereinrichtung angeordnet, dass wenigstens die Antriebswelle und/oder eine Gleitfläche zwischen der Positionierhülse und der Antriebswelle zumindest teilweise abgedichtet eingehaust sind. Somit ist die Dosiereinrichtung besonders Betriebssicher ausgeführt.

Die erfindungsgemäße Dosiereinrichtung wird ferner durch ein Fixierglied vorteilhaft weitergebildet, wobei der Dosierrotor mittels des Fixierglieds auf der Positionierhülse fixiert, insbesondere in Axialrichtung verklemmt, ist. Das Fixierglied kann eine Fixiermutter sein, welche auf ein Außengewinde der Positionierhülse aufgeschraubt ist und den Dosierrotor in Axialrichtung gegen einen, insbesondere umlaufenden, Rotoranschlag der Positionierhülse drückt. Der Rotoranschlag der Positionierhülse kann ein umlaufender Materialkragen der Positionierhülse sein.

Die der Erfindung zugrunde liegende Aufgabe wird ferner durch ein Verfahren der eingangs genannten Art gelöst, wobei im Rahmen des erfindungsgemäßen Verfahrens beim Einstellen der Axialposition des Dosierrotors eine in Bezug auf eine Antriebswelle für den Dosierrotor verdrehgesicherte Positionierhülse in Axialrichtung bewegt wird, um über die Positionierhülse den Dosierrotor in Axialrichtung zu verschieben. Mittels des Verfahrens wird vorzugsweise eine Dosiereinrichtung nach einer der vorstehend beschriebenen Ausführungsformen eingestellt. Hinsichtlich der Vorteile und Modifikationen des erfindungsgemäßen Verfahrens wird somit zunächst auf die Vorteile und Modifikationen der erfindungsgemäßen Dosiereinrichtung verwiesen.

Das Verfahren kann das Arretieren des Dosierrotors mittels einer Rotorarretierung umfassen. Das Arretieren des Dosierrotors verhindert eine Drehbewegung des Dosierrotors und der Positionierhülse beim Einstellen der Axialposition des Dosierrotors.

In einer bevorzugten Ausführungsform des erfindungsgemäßen Verfahrens wird die Positionierhülse durch eine Bewegung, insbesondere durch eine Drehbewegung, eines Einstellglieds des Einstellmechanismus in Axialrichtung verschoben. Das Verfahren kann das Hereindrehen und/oder das Herausdrehen der Einstellschraube zum Verschieben der Positionierhülse in Axialrichtung umfassen.

In einer anderen bevorzugten Ausführungsform des erfindungsgemäßen Verfahrens wird über ein in eine stirnseitige Werkzeugaufnahme des Einstellglieds eingreifendes Einstellwerkzeug eine Drehbewegung in das Einstellglied eingebracht. Das Einstellwerkzeug kann beispielsweise ein Schraubendreher oder ein Inbusschlüssel sein.

In einer anderen bevorzugten Ausführungsform des erfindungsgemäßen Verfahrens erfolgt ein Hereindrehen des Einstellglieds zum Verschieben der Positionierhülse und des Dosierrotors in eine Axialrichtung. Alternativ oder zusätzlich erfolgt ein Herausdrehen des Einstellglieds zum Verschieben der Positionierhülse und des Dosierrotors in eine Axialrichtung. Beim Hereindrehen des Einstellglieds werden die Positionierhülse und der Dosierrotor vorzugsweise in eine erste Axialrichtung verschoben, wobei durch Herausdrehen des Einstellglieds die Positionierhülse und der Dosierrotor in eine zweite, entgegengesetzte Axialrichtung verschoben werden.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Dosiereinrichtung ohne Gehäusedeckel in einer perspektivischen Darstellung;
- Fig. 2: eine Detaildarstellung der stirnseitigen Werkzeugaufnahme des Einstellglieds der in der Fig. 1 abgebildeten Dosiereinrichtung;
- Fig. 3: den Einstellmechanismus einer erfindungsgemäßen Dosiereinrichtung in einer seitlichen Schnittdarstellung;
- Fig. 4: eine erfindungsgemäße Dosiereinrichtung in einer Schnittdarstellung mit linksseitig außermittig angeordnetem Dosierrotor;
- Fig. 5: die in der Fig. 4 abgebildete Dosiereinrichtung in einer Schnittdarstellung mit mittig angeordnetem Dosierrotor;
- Fig. 6: die in der Fig. 4 abgebildete Dosiereinrichtung in einer Schnittdarstellung mit rechtsseitig außermittig angeordnetem Dosierrotor; und
- Fig. 7: den Einstellmechanismus einer weiteren erfindungsgemäßen Dosiereinrichtung in einer seitlichen Schnittdarstellung.

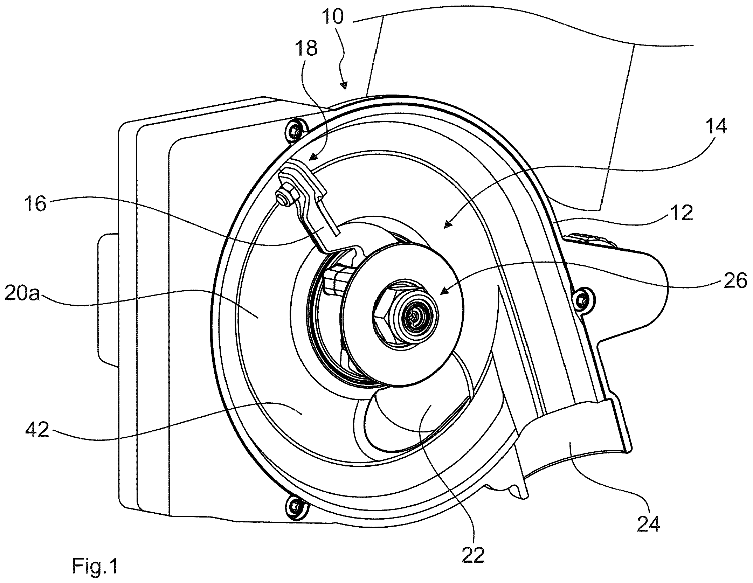

Die Fig. 1 zeigt eine Dosiereinrichtung 10 zum Dosieren von Ausbringmaterial. Bei der Dosiereinrichtung 10 handelt es sich um einen Düngerportionierer, sodass es sich bei dem zu portionierenden Ausbringmaterial um granularen Dünger handelt. Die Dosiereinrichtung 10 wird also zum Erzeugen von Düngerportionen eingesetzt, wobei die Düngerportionen eine Mehrzahl von Düngerkörnern umfassen.

Die Dosiereinrichtung 10 umfasst ein Rotorgehäuse 12, in welchem ein Dosierrotor 14 angeordnet ist. Der Dosierrotor 14 ist als Portionierrotor zum Erzeugen von Materialportionen ausgebildet. Zum Erzeugen der Materialportionen führt der Dosierrotor 14 eine Rotationsbewegung aus.

Während der Rotationsbewegung bewegen sich der Portionierflügel 16 und der an dem Portionierflügel 16 angeordnete Mitnehmer 18 durch die Dosierkammer 42 in dem Rotorgehäuse 12. Durch diese Rotationsbewegung sammelt der Mitnehmer 18 das sich in der Dosierkammer 42 befindende Ausbringmaterial ein, sodass es zu einer Portionsbildung kommt.

Der Dosierrotor 14 soll seitlich beabstandet von den seitlichen Wandungen 20a, 20b des Rotorgehäuses 12 laufen, sodass ein Schleifkontakt zwischen dem Dosierrotor 14 und den seitlichen Wandungen 20a, 20b vermieden wird. Die seitliche Wandung 20b befindet sich auf der Innenseite eines Gehäusedeckels 40, welcher in der Fig. 1 ausgeblendet ist.

Während eines Ausbringvorgangs wird das Ausbringmaterial über eine Zuführströmung pneumatisch der Dosiereinrichtung 10 zugeleitet und strömt über die Einlassöffnung 22 in die Dosierkammer 42 ein. Nach der Portionsbildung mittels des Dosierrotors 14 wird die erzeugte Materialportion dann über die Auslassöffnung 24 wieder aus der Dosierkammer 42 ausgeleitet.

Aufgrund von Fertigungstoleranzen, Verschleiß und/oder Beschädigungen kann es dazu kommen, dass der Dosierrotor 14 an einer seitlichen Wandung 20a, 20b schleift. Dieser Schleifkontakt führt zu einer Funktionsbeeinträchtigung und zu einem erhöhten Beschädigungsrisiko und ist während des Betriebs der Dosiereinrichtung 10 möglichst zu vermeiden. Zur Vermeidung eines solchen Schleifkontakts weist die Dosiereinrichtung 10 einen Einstellmechanismus 26 auf, mittels welchem die Axialposition des Dosierrotors 14 in dem Rotorgehäuse 12 einstellbar ist.

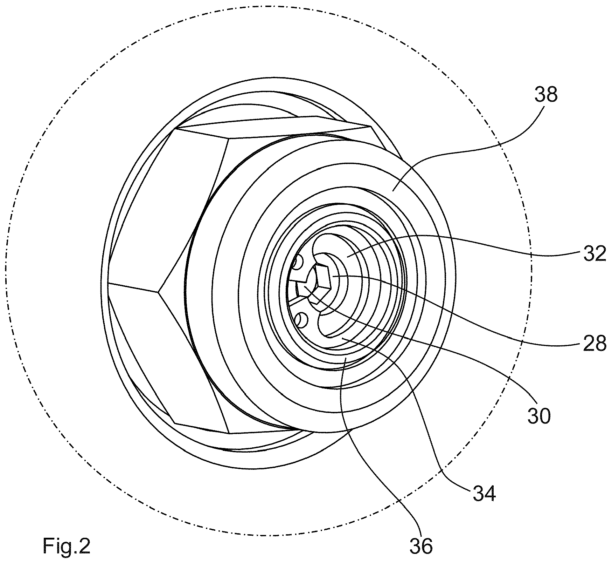

Die Fig. 2 zeigt, dass der Einstellmechanismus 26 ein Einstellglied 28 umfasst, wobei das Einstellglied 28 eine stirnseitige Werkzeugaufnahme 30 aufweist. Über die stirnseitige Werkzeugaufnahme 30 kann mittels eines Einstellwerkzeugs eine Drehbewegung in das Einstellglied 28 eingebracht werden. Das Einstellglied 28 ist eine Einstellschraube, wobei die Werkzeugaufnahme 30 am Schraubenkopf als Innensechskant ausgebildet ist. Das Einstellwerkzeug kann also ein Innensechskantschlüssel bzw. Inbusschlüssel sein. Über das Einstellwerkzeug kann das als Einstellschraube ausgebildete Einstellglied 28 hineingedreht und herausgedreht werden. Durch das Hineindrehen und Herausdrehen des Einstellglieds 28 wird eine Positionierhülse 36 des Einstellmechanismus 26 in Axialrichtung bewegt. Über die Bewegung der Positionierhülse 36 wird dann der Dosierrotor 14 in Axialrichtung verschoben.

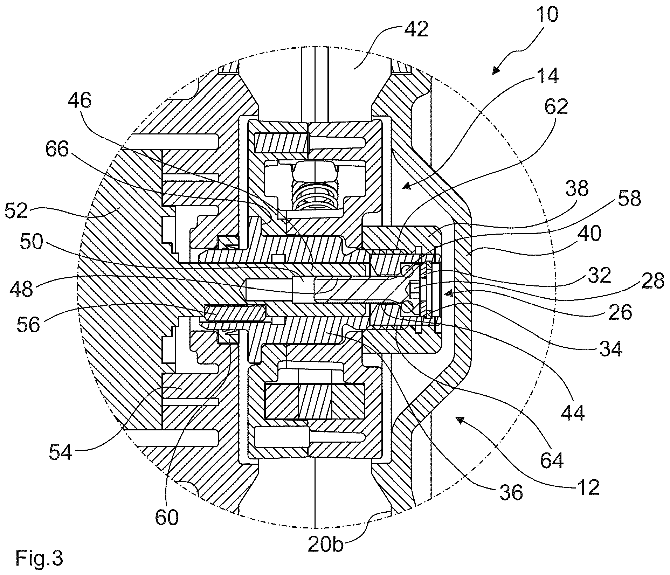

In der Fig. 3 ist angedeutet, dass die Positionierhülse 36 in Bezug auf eine Antriebswelle 46 für den Dosierrotor 14 verdrehgesichert ist. Durch die Verdrehsicherung der Positionierhülse 36 in Bezug auf die Antriebswelle 46 wird verhindert, dass der Dosierrotor 14 sich während der Einstellung der Axialposition drehen muss. Die Dosiereinrichtung 10 kann eine Rotorarretierung aufweisen, mittels welcher der Dosierrotor 14 beim Einstellen der Axialposition des Dosierrotors 14 arretiert ist.

Das als Einstellschraube ausgebildete Einstellglied 28 ist über das Außengewinde 44 in ein Innengewinde 48 in einer Ausnehmung 50 der Antriebswelle 46 eingeschraubt. Das Einstellglied 28 ist in der Positionierhülse 36 angeordnet und wird somit von der Hülsenwandung der Positionierhülse 36 umgeben. Das Einstellglied 28 ist mittels eines als Sicherungsring ausgebildeten Sicherungselements 34 axial in der Positionierhülse 36 gesichert, wobei das Sicherungselement 34 dazu eingerichtet ist, eine nach außen gerichtete Axialbewegung des Einstellglieds 28 auf die Positionierhülse zu übertragen. Die Übertragung der Axialbewegung erfolgt über eine Passscheibe 32, welche zwischen dem Schraubenkopf des Einstellglieds 28 und dem Sicherungselement 34 angeordnet ist.

Das Einstellglied 28 und die Positionierhülse 36 wirken über einen Axialanschlag ferner derart zusammen, dass eine nach innen gerichtete Axialbewegung des Einstellglieds 28 auf die Positionierhülse 36 übertragen wird. Zwischen der Positionierhülse 36 und dem Einstellglied 28 ist ein elastisch verformbarer Deformationskörper 58 angeordnet, welcher in einem verformten Zustand durch Verspannen von Positionierhülse 36 und Einstellglied 28 eine unbeabsichtigte Relativbewegung von Positionierhülse 36 und Einstellglied 28 verhindert oder zumindest hemmt. Der Deformationskörper 58 ist ein umlaufender Dichtungskörper, nämlich ein O-Ring.

Die Dosiereinrichtung 10 umfasst ferner ein als Fixiermutter ausgebildetes Fixierglied 38, mittels welchem der Dosierrotor 14 auf der Positionierhülse 36 fixiert, nämlich in Axialrichtung verklemmt, ist. Das als Fixiermutter ausgebildete Fixierglied 38 weist ein Innengewinde 64 auf, welches auf ein Außengewinde 62 der Positionierhülse 36 aufgeschraubt ist. Das Fixierglied 38 drückt den Dosierrotor 14 in Axialrichtung gegen einen umlaufenden Rotoranschlag 66 der Positionierhülse 36. Der Rotoranschlag 66 der Positionierhülse 36 ist ein umlaufender Materialkragen der Positionierhülse 36.

In der Fig. 3 ist ferner der Gehäusedeckel 40 des Rotorgehäuses 12 dargestellt. Der Gehäusedeckel 40 trägt die seitliche Innenwandung 20b des Rotorgehäuses. Um ein seitliches Schleifen des Dosierrotors 14 zu vermeiden, sollte dieser möglichst mittig zwischen den seitlichen Wandungen 20a, 20b des Rotorgehäuses 12 laufen.

Die über den Antrieb 52 rotatorisch angetriebene Antriebswelle 46 weist eine Nut 56 auf. Die in der Nut 56 zur Verdrehsicherung der Positionierhülse 36 eingesetzte Passfeder ist in der Abbildung nicht dargestellt.

Der Antrieb 52 weist ein Antriebsgehäuse 54 auf. Zwischen dem Antriebsgehäuse 54 und der Positionierhülse 36 befindet sich ein Wellendichtring 60. Die Antriebswelle 46 und die Gleitfläche zwischen der Positionierhülse 36 und der Antriebswelle 46 sind über den als O-Ring ausgebildeten Deformationskörper 58 und den Wellendichtring 60 abgedichtet eingehaust.

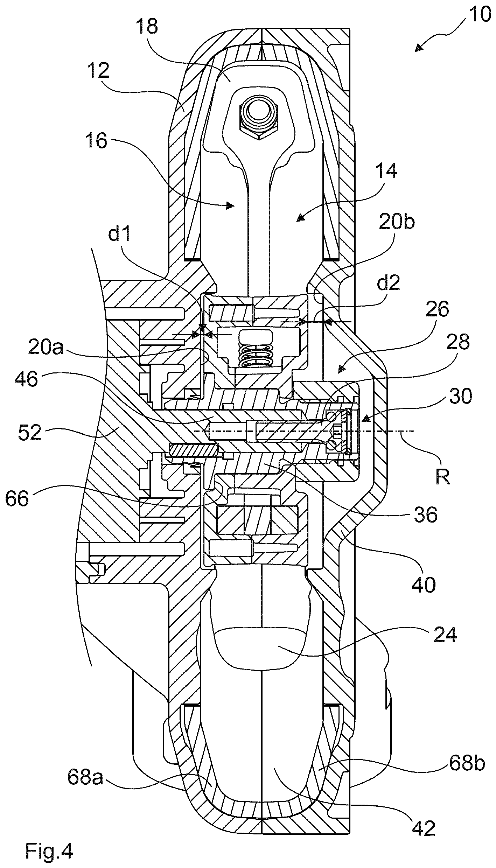

Die Fig. 4 zeigt, dass das Rotorgehäuse 12 Führungseinsätze 68a, 68b aufweist, deren Kontur an die Form des Mitnehmers 18 angepasst sind.

Im Betrieb der Dosiereinrichtung 10 führt der Dosierrotor 14 eine Rotationsbewegung um die Rotationsachse R aus. Bei dem in der Fig. 4 dargestellten Zustand befindet sich der Dosierrotor 14 in Bezug auf seine Axialausrichtung außermittig in der Dosierkammer 42. Der Axialabstand d1 des Dosierrotors 14 auf der dem Antrieb 52 zugewandten Seite des Dosierrotors 14 zu der seitlichen Wandung 20a ist kleiner als der Axialabstand d2 des Dosierrotors 14 auf der dem Antrieb 52 abgewandten Seite des Dosierrotors zu der seitlichen Wandung 20b. Zur mittigen Ausrichtung ist der Dosierrotor 14 also axial in Richtung der seitlichen Wandung 20b zu bewegen.

Zur Einstellung der korrekten Axialposition des Dosierrotors 14 ist zunächst der Gehäusedeckel 40 zu lösen, um die stirnseitige Werkzeugaufnahme 30 des Einstellglieds 28 des Einstellmechanismus 26 zugänglich zu machen. Mittels eines Einstellwerkzeugs ist dann eine Drehbewegung in das Einstellglied 28 einzubringen. Bei einer Drehbewegung gegen den Uhrzeigersinn zieht das Einstellglied 28 die Positionierhülse 36 axial nach außen, wobei die Positionierhülse 36 den Dosierrotor 14 über den Rotoranschlag 66 mitnimmt.

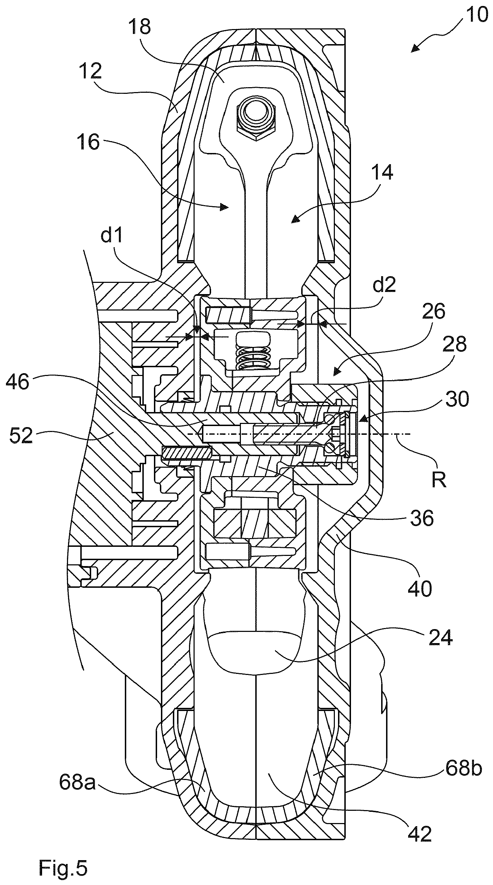

Die Fig. 5 zeigt den Dosierrotor 14 in axialzentrierter Stellung in der Dosierkammer 42 des Rotorgehäuses 12. Der Axialabstand d1 auf der dem Antrieb 52 zugewandten Seite des Dosierrotors 14 und der Axialabstand d2 auf der dem Antrieb 52 abgewandten Seite des Dosierrotors 14 stimmen überein. Der in der Fig. 5 dargestellte Zustand ist hinsichtlich der Axialausrichtung des Dosierrotors 14 optimal.

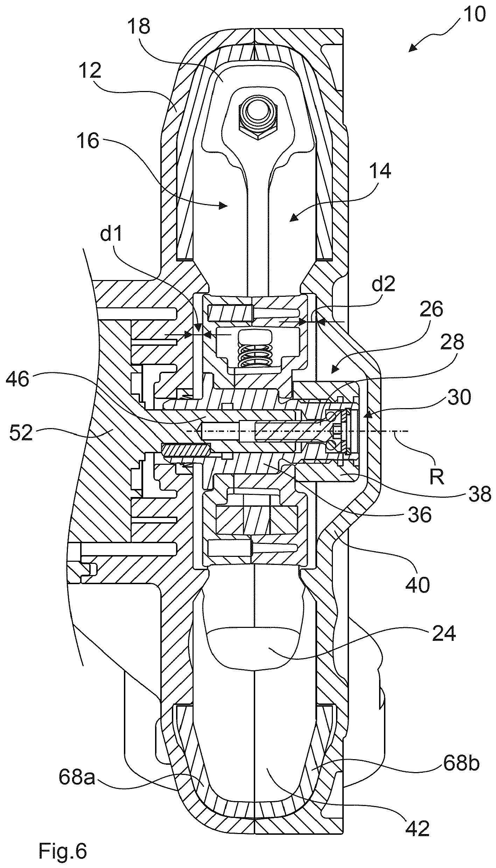

Bei dem in der Fig. 6 dargestellten Zustand befindet sich der Dosierrotor 14 außermittig, nämlich derart, dass der Axialabstand d1 des Dosierrotors 14 auf der dem Antrieb 52 zugewandten Seite zur seitlichen Wandung 20a größer ist als der Axialabstand d2 des Dosierrotors 14 auf der dem Antrieb 52 abgewandten Seite des Dosierrotors zur seitlichen Wandung 20b.

Zur Einstellung der korrekten Axialposition des Dosierrotors 14 ist zunächst der Gehäusedeckel 40 zu lösen, sodass die Werkzeugaufnahme 30 des Einstellglieds 28 zugänglich ist. Das Einstellglied 28 ist dann über ein in die Werkzeugaufnahme 30 eingesetztes Einstellwerkzeug im Uhrzeigersinn hereinzudrehen, sodass die Positionierhülse 36 axial in Richtung des Antriebs 52 bewegt wird. Über das als Fixiermutter ausgebildete Fixierglied 38 wird die Axialbewegung der Positionierhülse 36 auf den Dosierrotor 14 übertragen, sodass sich der Dosierrotor axial in Richtung des Antriebs 52 bewegt.

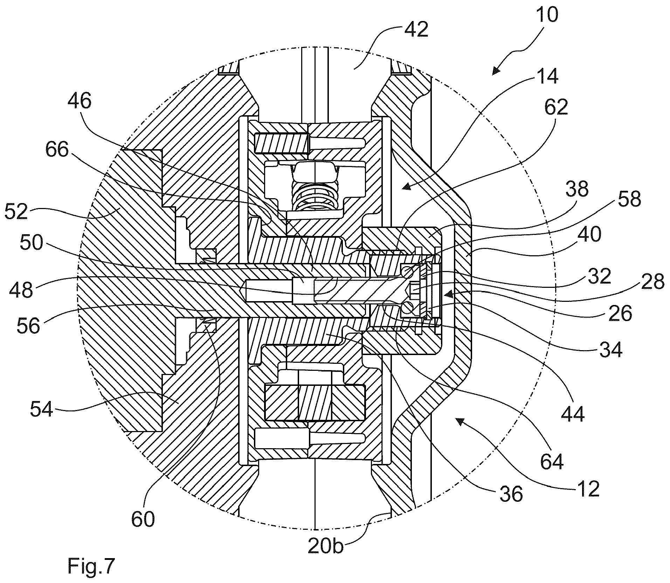

Die Fig. 7 zeigt einen alternativen Aufbau einer Dosiereinrichtung 10 ohne vollständige Einhausung der Antriebswelle 46. Der Wellendichtring 60 ist in diesem Fall auf der Antriebswelle 46 und nicht auf der Positionierhülse 36 angeordnet. Die stufenlose Axialverstellung inklusive der Losdrehsicherung durch den Deformationskörper 58 ist auch bei dieser Ausführungsform gewährleistet.

### Bezugszeichenliste

- 10: Dosiereinrichtung
- 12: Rotorgehäuse
- 14: Dosierrotor
- 16: Portionierflügel
- 18: Mitnehmer
- 20a, 20b: seitliche Wandung
- 22: Einlassöffnung
- 24: Auslassöffnung
- 26: Einstellmechanismus
- 28: Einstellglied
- 30: Werkzeugaufnahme
- 32: Passscheibe
- 34: Sicherungselement
- 36: Positionierhülse
- 38: Fixierglied
- 40: Gehäusedeckel
- 42: Dosierkammer
- 44: Außengewinde
- 46: Antriebswelle
- 48: Innengewinde
- 50: Ausnehmung
- 52: Antrieb
- 54: Antriebsgehäuse
- 56: Nut
- 58: Deformationskörper
- 60: Wellendichtring
- 62: Außengewinde
- 64: Innengewinde
- 66: Rotoranschlag
- 68a, 68b: Führungseinsätze
- d1, d2: Axialabstände
- R: Rotationsachse

## Patentansprüche

1. Dosiereinrichtung (10) zum Dosieren von Ausbringmaterial für eine dosierte Ablage von Ausbringmaterial auf eine landwirtschaftliche Nutzfläche durch eine landwirtschaftliche Ausbringmaschine, mit
- einem Rotorgehäuse (12);
- einem in dem Rotorgehäuse (12) angeordneten Dosierrotor (14), welcher dazu eingerichtet ist, zum Dosieren des Ausbringmaterials eine Rotationsbewegung auszuführen; und
- einem Einstellmechanismus (26), mittels welchem die Axialposition des Dosierrotors (14) in dem Rotorgehäuse (12) einstellbar ist;
**dadurch gekennzeichnet, dass** der Einstellmechanismus (26) eine in Bezug auf eine Antriebswelle (46) für den Dosierrotor (14) verdrehgesicherte und in Axialrichtung bewegbare Positionierhülse (36) aufweist, über welche der Dosierrotor (14) in Axialrichtung verschiebbar ist.

2. Dosiereinrichtung (10) nach Anspruch 1,
**dadurch gekennzeichnet, dass** der Einstellmechanismus (26) ein, insbesondere durch eine Drehbewegung, in Axialrichtung bewegbares Einstellglied (28) aufweist, über welches die Positionierhülse (36) in Axialrichtung verschiebbar ist.

3. Dosiereinrichtung (10) nach Anspruch 2,
**dadurch gekennzeichnet, dass** das Einstellglied (28) eine stirnseitige Werkzeugaufnahme (30) aufweist, über welche mittels eines Einstellwerkzeugs eine Drehbewegung in das Einstellglied (28) einbringbar ist.

4. Dosiereinrichtung (10) nach Anspruch 2 oder 3,
**dadurch gekennzeichnet, dass** das Einstellglied (28) in der Positionierhülse (36) angeordnet ist.

5. Dosiereinrichtung (10) nach einem der Ansprüche 2 bis 4,
**dadurch gekennzeichnet, dass** das Einstellglied (28) mittels eines Sicherungselements (34) axial in der Positionierhülse (36) gesichert ist, wobei das Sicherungselement (34) vorzugsweise dazu eingerichtet ist, eine nach außen gerichtete Axialbewegung des Einstellglieds (28) auf die Positionierhülse (36) zu übertragen.

6. Dosiereinrichtung (10) nach einem der Ansprüche 2 bis 5,
**dadurch gekennzeichnet, dass** das Einstellglied (28) und die Positionierhülse (36) über einen Axialanschlag zusammenwirken, welcher vorzugsweise dazu eingerichtet ist, eine nach innen gerichtete Axialbewegung des Einstellglieds (28) auf die Positionierhülse (36) zu übertragen.

7. Dosiereinrichtung (10) nach einem der Ansprüche 2 bis 6,
**dadurch gekennzeichnet, dass** zwischen der Positionierhülse (36) und dem Einstellglied (28) ein elastisch verformbarer Deformationskörper (58) angeordnet ist, welcher dazu eingerichtet ist, in einem verformten Zustand durch Verspannen von Positionierhülse (36) und Einstellglied (28) eine unbeabsichtigte Relativbewegung von Positionierhülse (36) und Einstellglied (28) zu verhindern oder zumindest zu hemmen.

8. Dosiereinrichtung (10) nach einem der Ansprüche 2 bis 7,
**dadurch gekennzeichnet, dass** die Positionierhülse (36) formschlüssig, insbesondere mittels einer Passfeder, an der Antriebswelle (46) für den Dosierrotor (14) verdrehgesichert ist.

9. Dosiereinrichtung (10) nach einem der vorstehenden Ansprüche,
**gekennzeichnet durch** einen Antrieb, welcher in einem Antriebsgehäuse (54) angeordnet und dazu eingerichtet ist, die Antriebswelle (46) rotatorisch anzutreiben, wobei zwischen dem Antriebsgehäuse (54) und der Positionierhülse (36) ein Wellendichtring (60) angeordnet ist.

10. Dosiereinrichtung (10) nach den Ansprüchen 7 und 9, **dadurch gekennzeichnet, dass** der Deformationskörper (58) als Dichtungskörper ausgebildet ist, welcher dazu eingerichtet ist, den Einstellmechanismus, vorzugsweise zumindest einseitig und/oder zum Inneren hin, abzudichten, besonders vorzugsweise derart, dass wenigstens die Antriebswelle (46) und/oder eine Gleitfläche zwischen der Positionierhülse (36) und der Antriebswelle (46) zumindest teilweise abgedichtet eingehaust ist.

11. Dosiereinrichtung (10) nach einem der vorstehenden Ansprüche,
**dadurch gekennzeichnet, dass** der Dosierrotor (14) als Portionierrotor zum Erzeugen von Materialportionen oder als Vereinzelungsrotor zum Vereinzeln von Materialkörnern ausgebildet ist.

12. Dosiereinrichtung (10) nach einem der vorstehenden Ansprüche,
**gekennzeichnet durch** ein Fixierglied (38), mittels welchem der Dosierrotor (14) auf der Positionierhülse (36) fixiert, insbesondere in Axialrichtung verklemmt, ist.

13. Verfahren zum Einstellen einer Dosiereinrichtung (10) einer landwirtschaftlichen Ausbringmaschine, insbesondere einer Dosiereinrichtung (10) nach einem der vorstehenden Ansprüche, wobei die Dosiereinrichtung (10) ein Rotorgehäuse (12) und einen in dem Rotorgehäuse (12) angeordneten Dosierrotor (14) umfasst, welcher dazu eingerichtet ist, zum Dosieren des Ausbringmaterials eine Rotationsbewegung auszuführen, mit dem Schritt:
- Einstellen der Axialposition des Dosierrotors (14) in dem Rotorgehäuse (12) mittels eines Einstellmechanismus (26);
**dadurch gekennzeichnet, dass** beim Einstellen der Axialposition des Dosierrotors (14) eine in Bezug auf eine Antriebswelle (46) für den Dosierrotor (14) verdrehgesicherte Positionierhülse (36) in Axialrichtung bewegt wird, um über die Positionierhülse (36) den Dosierrotor (14) in Axialrichtung zu verschieben.

14. Verfahren nach Anspruch 13,
**dadurch gekennzeichnet, dass** die Positionierhülse (36) durch eine Bewegung, insbesondere durch eine Drehbewegung, eines Einstellglieds (28) des Einstellmechanismus (26) in Axialrichtung verschoben wird.

15. Verfahren nach Anspruch 14,
**gekennzeichnet durch** den Schritt:
- Einbringen einer Drehbewegung in das Einstellglied (28) über ein in eine stirnseitige Werkzeugaufnahme (30) des Einstellglieds (28) eingreifendes Einstellwerkzeug.

16. Verfahren nach Anspruch 14 oder 15,
**gekennzeichnet durch** zumindest einen der folgenden Schritte:
- Hereindrehen des Einstellglieds (28) zum Verschieben der Positionierhülse (36) und des Dosierrotors (14) in eine Axialrichtung;
- Herausdrehen des Einstellglieds (28) zum Verschieben der Positionierhülse (36) und des Dosierrotors (14) in eine Axialrichtung.
